# EUROPEAN PATENT SPECIFICATION

(11) **EP 2 146 286 B1**
(45) Date of publication and mention of the grant of the patent: **04.04.2012**
(21) Application number: 09009027.5
(22) Date of filing: 10.07.2009
(51) Int. Cl.: G06F 13/40

(54) **Converter and control system**
Wandler und Steuersystem
Convertisseur et système de contrôle

(30) Priority: 17.07.2008 JP 2008186436
(43) Date of publication of application: 20.01.2010
(73) Proprietor: Kabushiki Kaisha Toshiba, Minato-ku Tokyo (JP)
(72) Inventor: Murakami, Masayuki, Tokyo (JP)
(74) Representative: HOFFMANN EITLE

(56) References cited:
- US-A1- 2003 072 138
- US-B1- 6 675 254

## Description

### BACKGROUND OF THE INVENTION

### 1. Field of Art

The present invention relates to a converter and a control system adaptive, upon replacement from a controller of a 6U size compliant with the CompactPCI standard to a controller of a 3U size compliant with the CompactPCI Express standard, to implement a stepwise downsizing from the 6U size to the 3U size, permitting maximal utilization of existing equipment.

### 2. Description of Relevant Art

In controllers for PA (Process Automation) use, such as petrochemical or steel plants, for instance, most hardware configurations have been implemented in compliance with the CompactPCI (Compact Peripheral Component Interconnect bus) standard as a high-integrity hardware standard. In such CompactPCI standard-compliant controllers, a CompactPCI standard-compliant backboard (referred herein to "CPCI back board") has had a combination of CompactPCI-standard compliant CPU board and/or I/O boards' extension boards (referred herein to "CPCI boards") connected thereto, for accommodation into a rack (refer to e.g. patent document-1 below).

For the CPCI boards, there are two supported board sizes being the 3U (160 mm x 100 mm) and the 6U (160 mm x 233.35 mm).

In recent years, as a subsequent standard of the CompactPCI standard, the CompactPCI Express standard has been proposed and started its application to controllers. Like the CompactPCI standard, the CompactPCI Express standard supports 6U and 3U board sizes. Along with the now trend for a downscaled equipment, there have been replacements of CompactPCI standard-compliant controllers with CompactPCI Express standard-compliant controllers, whereupon it has been desirable to implement a downsizing from 6U to 3U.
Patent document-I: Japanese National Phase Patent Application Laid-Open Publication No. 2004-519770

US 2003/072138 A1 shows a rack with 6U CPCI circuit board slots, wherein a 6U compact PCI circuit board slot can be converted to house two 3U sized compact PCI circuit board cards.

US 6 675 254 B1 A shows a system for transferring information at a fast rate between add-in cards in a rack mount system, in particular a rack mount system with two switch cards and two switched Ethernet interconnects, whereby rather than integrating the two switched Ethernet interconnects within mid-plane, the two switched Ethernet interconnects are implemented using external cables attached to transition cards inserted into transition card slot.

### SUMMARY OF THE INVENTION

In the above-noted patent document-I, the disclosure has no considerations taken for replacement of CompactPCI standard-compliant controller with CompactPCI Express standard-compliant controller, whereby it has been difficult to implement a downsizing from 6U to 3U.

In addition, most users want to make a replacement with a CompactPCI Express standard-compliant controller, utilizing existing CPCI boards to suppress replacement costs. For instance, in most cases, they want to provide a configuration of CompactPCI Express standard-compliant controller with an upgraded CPU board for an enhanced processing performance, while utilizing existing I/O boards.

To this point, there is a backboard as a commercial reality adapted to mount thereto both CompactPCI standard-compliant boards (referred herein to "CPCI boards") and CompactPCI Express standard-compliant boards (referred herein to "CPCIe boards"), as stipulated in the CompactPCI Express standard, as well. More specifically, the backboard has a set of slots adaptive for application of CPCI boards, another set of slots adaptive for application of CPCIe boards, and another slot adaptive for application of a bridgeboard for conversion between PCI bus signal and PCIe bus signal.

In use of such a backboard for replacement from an existing CPCI system that has boards of the 6U size, to a new CPCIe system to which the 6U boards are to be recycled and which also has to employ the 6U size, it is disabled to downsize associated housings from the 6U size to the 3U size.

The present invention has been devised in view of such issues. It therefore is 30 an object of the present invention to provide a converter and a control system adaptive, upon replacement from a controller of the 6U size compliant with the CompactPCI standard to a controller of the 3U size compliant with the CompactPCI Express standard, to implement a stepwise downsizing from the 6U size to the 3U size, allowing for a maximized utilization of existing equipment.

To achieve the object described, according to a first aspect of the present invention, a converter comprises a CPCIe switchboard configured to be applied to one slot out of slots provided to a CPCIe backboard being a backboard of a 3U size compliant with a CPCIe standard, and cooperative with a combination of a CPCIe CPU board and a CPCIe extension board applied to other slots else than the slot provided to the CPCIe backboard for mutual transmission and reception of PCIe bus signals in accordance with a PCIe bus standard, and a CPCI bridgeboard configured to be applied to one slot out of slots provided to a CPCI backboard being a backboard of a 6U size compliant with a CPCI standard, and cooperative with a CPCI extension board applied to another slot else than the slot provided to the CPCI backboard for mutual transmission and reception of PCI bus signals in accordance with a PCI bus standard, and connected to the CPCIe switchboard via a PCIe external cabling standard-compliant external cable connected to a PCIe external cabling standard-compliant connector disposed to a front panel, and cooperative with the CPCIe switchboard for mutual transmission and reception of PCIe bus signals in accordance with the PCIe bus standard.

To achieve the object described, according to a second aspect of the present invention, a converter comprises a CPCIe CPU board configured to be applied to one slot out of slots provided to a CPCIe backboard being a backboard of a 3U size compliant with a CPCIe standard, and cooperative with a CPCIe extension board applied to another slot else than the slot provided to the CPCIe backboard for mutual transmission and reception of PCIe bus signals in accordance with a PCIe bus standard, depending on instructions of an incorporated CPU, and a CPCI bridgeboard configured to be applied to one slot out of slots provided to a CPCI backboard being a backboard of a 6U size compliant with a CPCI standard, and cooperative with a CPCI extension board applied to another slot else than the slot provided to the CPCI backboard for mutual transmission and reception of PCI bus signals in accordance with a PCI bus standard, and connected to the CPCIe CPU board via a PCIe external cabling standard-compliant external cable connected to a PCIe external cabling standard-compliant connector disposed to a front panel, and cooperative with the CPCIe CPU board for mutual transmission and reception of PCIe bus signals in accordance with the PCIe bus standard.

To achieve the object described, according to a third aspect of the present invention, in the converter according to the first aspect, the CPCI bridgeboard comprises a user-defined signal control device configured for connection to the CPCI backboard to convert a user-defined signal being a signal capable of a setting for control by a user as supplied from the CPCI backboard into a PCIe bus signal in accordance with the PCIe bus standard, and convert a supplied PCIe bus signal into a user-defined signal, and a PCIe switch configured for connection to the CPCIe switchboard via the external cable and connection to the user-defined signal control device via a PCIe bus standard-compliant internal wiring.

To achieve the object described, according to a fourth aspect of the present invention, in the converter according to the second aspect, the CPCI bridgeboard comprises a user-defined signal control device configured for connection to the CPCI backboard to convert a user-defined signal being a signal capable of a setting for control by a user as supplied from the CPCI backboard into a PCIe bus signal in accordance with the PCIe bus standard, and convert a supplied PCIe bus signal into a user-defined signal, and a PCIe switch configured for connection to the CPCIe CPU board via the external cable and connection to the user-defined signal control device via a PCIe bus standard-compliant internal wiring.

To achieve the object described, according to a fifth aspect of the present invention, in the converter according to the first aspect, the CPCI bridgeboard comprises a user-defined signal control device configured for connection to the CPCI backboard to convert a user-defined signal being a signal capable of a setting for control by a user as supplied from the CPCI backboard into a PCIe bus signal in accordance with the PCIe bus standard, and convert a supplied PCIe bus signal into a user-defined signal, and a PCIe-PCI bridge configured for connection to the CPCIe switchboard via the external cable and connection to the user-defined signal control device via a PCI bus standard-compliant internal wiring, to convert a PCIe bus signal supplied from the CPCIe switchboard into a PCI bus signal for supply to the user-defined signal control device, and convert a PCI bus signal supplied from the user-defined signal control device into a PCIe bus signal for supply to the CPCIe switchboard..

To achieve the object described, according to a sixth aspect of the present invention, in the converter according to the second aspect, the CPCI bridgeboard comprises a user-defined signal control device configured for connection to the CPCI backboard to convert a user-defined signal being a signal capable of a setting for control by a user as supplied from the CPCI backboard into a PCI bus signal in accordance with the PCI bus standard, and convert a supplied PCI bus signal into a user-defined signal, and a PCIe-PCI bridge configured for connection to the CPCIe CPU board via the external cable and connection to the user-defined signal control device via a PCI bus standard-compliant internal wiring, to convert a PCIe bus signal supplied from the CPCIe CPU board into a PCI bus signal for supply to the user-defined signal control device, and convert a PCI bus signal supplied from the user-defined signal control device into a PCIe bus signal for supply to the CPCIe CPU board..

To achieve the object described, according to a seventh aspect of the present invention, a control system includes a first controller compliant with a CPCI standard, and a second controller compliant with a CPCIe standard and connected to the first controller via a PCIe external cabling standard-compliant external cable, the second controller comprises a CPCIe backboard being a backboard of a 3U size compliant with the CPCIe standard and provided with a plurality of slots, a CPCIe standard-compliant CPCIe CPU board having a CPU incorporated therein, and applied to one slot out of the plurality of slots the CPCIe backboard is provided with, a set of one or more CPCIe standard-compliant CPCIe extension boards applied to one or more slots out of the plurality of slots the CPCIe backboard is provided with, and a CPCIe switchboard configured to be applied to one slot out of the plurality of slots the CPCIe backboard is provided with, and cooperative with the CPCIe CPU board and the set of one or more CPCIe extension boards for mutual transmission and reception of PCIe bus signals in accordance with a PCIe bus standard, and the first controller comprises a CPCI backboard being a backboard of a 6U size compliant with the CPCI standard, a set of one or more CPCI standard-compliant CPCI extension boards applied to one or more slots out of a plurality of slots the CPCI backboard is provided with, and a CPCI bridgeboard configured to be applied to one or more slots out of the plurality of slots the CPCI backboard is provided with, and cooperative with the set of one or more CPCI extension boards for mutual transmission and reception of PCI bus signals in accordance with a PCI bus standard, and connected to the CPCIe switchboard via the external cable connected to a PCIe external cabling standard-compliant connector disposed to a front panel, and cooperative with the CPCIe switchboard for mutual transmission and reception of PCIe bus signals in accordance with the PCIe bus standard.

To achieve the object described, according to an eighth aspect of the present invention, a control system includes a first controller compliant with a CPCI standard, and a second controller compliant with a CPCIe standard and connected to the first controller via a PCIe external cabling standard-compliant external cable, the second controller comprises a CPCIe backboard being a backboard of a 3U size compliant with the CPCIe standard and provided with a plurality of slots, a set of one or more CPCIe standard-compliant CPCIe extension boards applied to one or more slots out of the plurality of slots the CPCIe backboard is provided with, and a CPCIe CPU board configured to be applied to one slot out of the plurality of slots the CPCIe backboard is provided with, and cooperative with the set of one or more CPCIe extension boards for mutual transmission and reception of PCIe bus signals in accordance with a PCIe bus standard, depending on instructions of an incorporated CPU, and the first controller comprises a CPCI backboard being a backboard of a 6U size compliant with the CPCI standard, a set of one or more CPCI standard-compliant CPCI extension boards applied to one or more slots out of a plurality of slots the CPCI backboard is provided with, and a CPCI bridgeboard configured to be applied to one or more slots out of the plurality of slots the CPCI backboard is provided with, and cooperative with the set of one or more CPCI extension boards for mutual transmission and reception of PCI bus signals in accordance with a PCI bus standard, and connected to the CPCIe CPU board via a PCIe external cabling standard-compliant external cable connected to a PCIe external cabling standard-compliant connector disposed to a front panel, and cooperative with the CPCIe CPU board for mutual transmission and reception of PCIe bus signals in accordance with the PCIe bus standard.

### BRIEF DESCRIPTION OF THE DRAWINGS

Fig. 1 is a perspective view of a control system according to a first embodiment of the present invention.
Fig. 2 is a perspective view of a CPCI bridgeboard of a first controller of the control system according to the first embodiment.
Fig. 3 is a perspective view of a CPCIe switchboard of a second controller of the control system according to the first embodiment.
Fig. 4 is a block diagram of the control system according to the first embodiment.
Figs. 5A and 5B are block diagrams of circuitry associated with transmission and reception of user-defmed signals of the control system according to the first embodiment.
Figs. 6A, 6B, and 6C are illustrations describing a replacement procedure of the control system according to the first embodiment.
Fig. 7 is a perspective view of a control system according to a second embodiment of the present invention.
Fig. 8 is a block diagram of the control system according to the second embodiment.

### DETAILED DESCRIPTION OF THE PREFERRED EMBODIMENTS

There will be described the preferred embodiments of the present invention with reference to the accompanying drawings.

### (First Embodiment)

For replacement of a CompactPCI (referred herein to "CPCI") standard-compliant 6U-size controller now in operation with a CompactPCI Express (referred herein to "CPCIe") standard-compliant controller, most users want to implement a downsizing to a CPCIe standard-compliant 3U-size controller, making effective utilization of resources of the CPCI standard-compliant 6U-size controller.

In this respect, as a first embodiment of the present invention, there will be described a control system that includes a CPCI standard-compliant 6U-size controller, and a CPCIe standard-compliarit 3U-size controller, and that is adapted to make effective utilization of resources of a CPCI standard-compliant controller, for a final replacement with a CPCIe standard-compliant controller.

### <Outline of the control system >

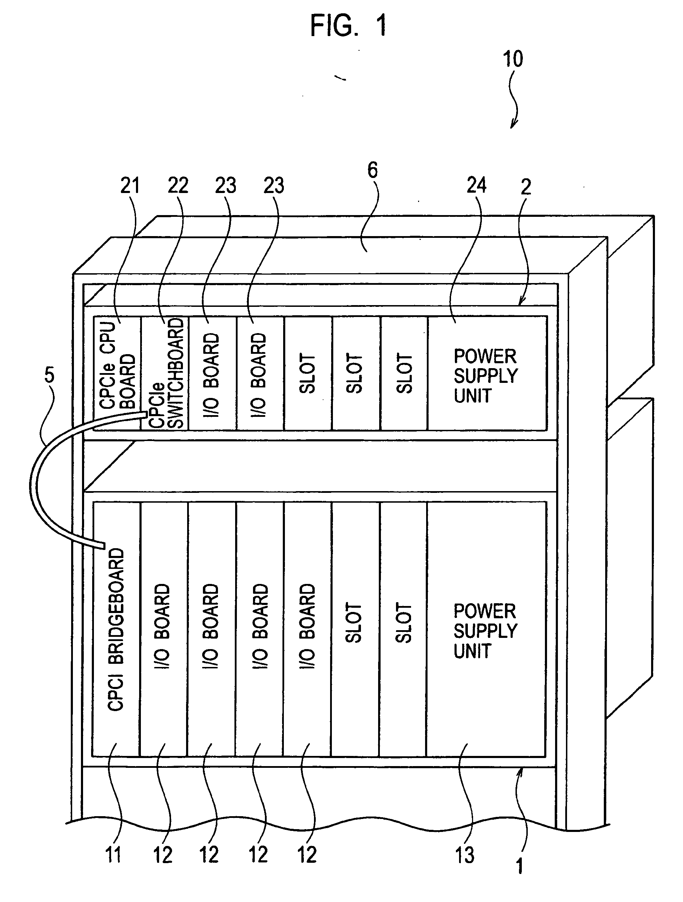

Fig. 1 is a perspective view of a control system 10 according to the first embodiment.

As illustrated in Fig.1, the control system 10 according to the first embodiment includes a first controller 1 and a second controller 2, the first controller 1 and the second controller 2 being accommodated in a rack 6.

The first controller 1 and the second controller 2 are connected to each other via a PCIe external cable 5 as a PCIe external cabling standard-compliant external cable.

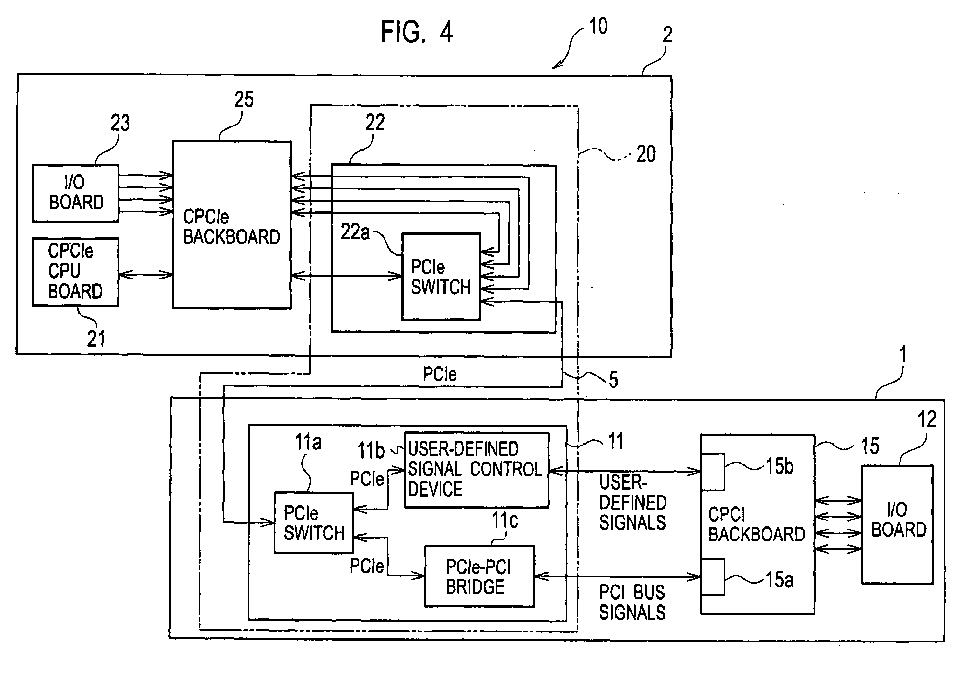

The first controller 1 has a power supply unit 13, and a CPCI backboard 15 (Fig. 4) as a backboard configured for application of 6U (160mm x 233.35mm) boards compliant with the CPCI standard, the CPCI backboard being supplied with power from the power supply unit 13.

The CPCI backboard is provided with seven slots compliant with the CPCI standard, whereto a CPCI bridgeboard 11 and I/O boards 12 are applied in a one-to-one corresponding manner.

The CPCI bridgeboard 11 is cooperative with the I/O boards 12 applied to other slots provided to the CPCI backboard, for mutual transmission and reception of signals such as a user-defined signal and PCI bus signals in accordance with a PCI bus standard. As used herein, the term "user-defined signal" means a signal capable of a setting for control by a user.

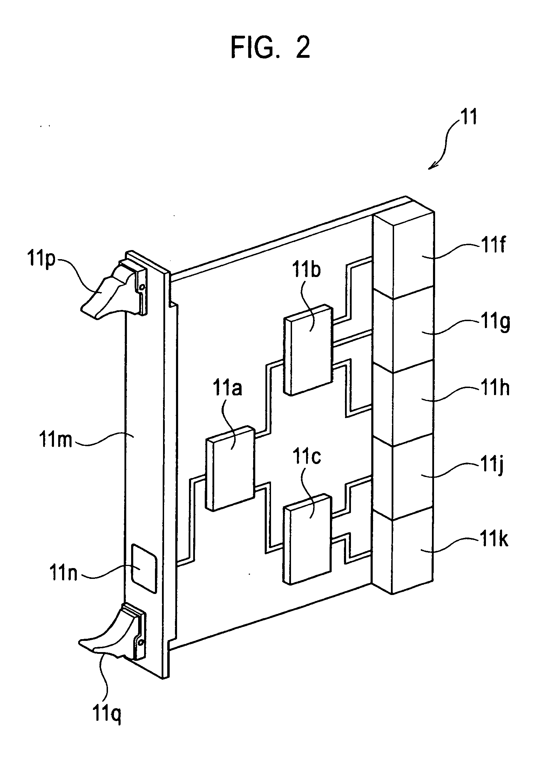

The CPCI bridgeboard 11 has, at the front relative to the CPCI backboard, i.e., at a front panel 11m (Fig. 2) thereof, a PCIe external cabling standard-compliant PCIe external connector 11n (Fig. 2) disposed thereto, and is connected to the second controller 2 through the PCIe external connector 11n and the PCIe external cable 5 connected thereto, and cooperative with the second controller 2 for mutual transmission and reception of PCIe bus signals in accordance with a PCIe bus standard.

The I/O boards 12, four in total number in the embodiment illustrated in Fig. 1, are each applied to the CPCI backboard, as an input/output interfacing extension board compliant with the CPCI standard.

The second controller 2 has a power supply unit 24, and a CPCIe backboard. 25 (Fig. 4) as a backboard configured for application of 3U (160mm x 100mm) boards compliant with the CPCIe standard, the CPCIe backboard being supplied with power from the power supply unit 24.

The CPCIe backboard is provided with seven slots compliant with the CPCIe standard, whereto a CPCIe CPU board 21, a CPCIe switchboard 22, and I/O boards 23 are applied in a one-to-one corresponding manner.

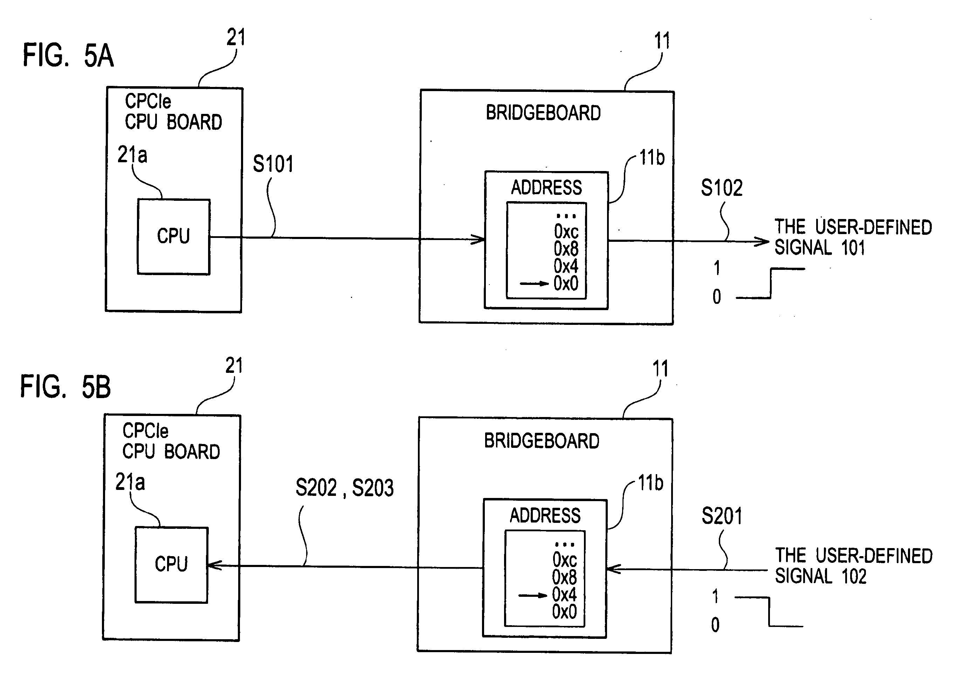

The CPCIe CPU board 21 has a CPU 21a (Figs. 5A and 5B), and is operative for a central control for the control system 10.

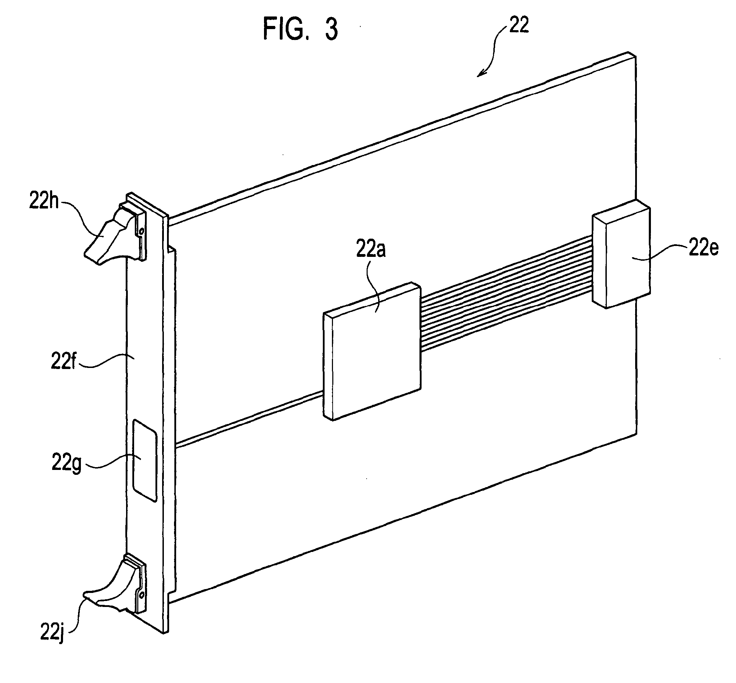

The CPCIe switchboard 22 is cooperative with the CPCIe CPU board 21 and the CPCIe I/O boards 23 for transmission and reception of PCIe bus signals in accordance with the PCIe bus standard. The CPCIe switchboard 22 has, at a front panel 22g (Fig. 3) thereof, a PCIe external cabling standard-compliant PCIe external connector 22g (Fig. 3) disposed thereto, and is connected to the CPCI bridgeboard 11 through the PCIe external connector 22g and the PCIe external cable 5 connected thereto, and cooperative with the CPCI bridgeboard 11 for mutual transmission and reception of PCIe bus signals in accordance with the PCIe bus standard.

The I/O boards 23, two in total number in the embodiment illustrated in Fig. 1, are each applied to the CPCIe backboard, as an input/output interfacing extension board compliant with the CPCIe standard.

Fig. 2 is a perspective view of the CPCI bridgeboard 11 of the first controller 1 of the control system 10 according to the first embodiment.

The CPCI bridgeboard 11 is inserted in the first controller 1, with finger grips 11p and 11q thumbed inwards as illustrated in Fig. 2, and with CPCI standard-compliant CPCI rear connectors 11f, 11g, 11h, 11j, and 11k applied to a slot of the CPCI backboard.

The CPCI rear connector11k, corresponding to J1 connector of the CPCI standard, has a PCI bus signal assigned thereto for transfer of 32-bit data. The CPCI rear connector11j, corresponding to J2 connector of the CPCI standard, has a PCI bus signal assigned thereto for transfer of 64-bit data. The CPCI rear connectors 11f, 11g, and 11h, corresponding to J3, J4, and J5 connectors of the CPCI standard, respectively, each have a user-defined signal assigned thereto as a signal capable of a setting for control by a user.

The front panel 11m of the CPCI bridgeboard 11 has the PCIe external cabling standard-compliant PCIe external connector 11n disposed thereto for external connection, and the PCIe external cable 5 is applied to the PCIe external connector 11n.

Disposed on a substrate of the CPCI bridgeboard 11 is a PCIe standard-compliant PCIe switch 11a, a user-definition signal control device 11b, and a PCIe-PCI bridge 11c. The PCIe external connector 11n is connected to the PCIe switch 11a via a wiring on the substrate of the CPCI bridgeboard 11, and the PCIe switch 11a is connected to the user-definition signal control device 11b and the PCIe-PCI bridge 11c via wirings on the substrate of the CPCI bridgeboard 11.

The user-definition signal control device 11b is connected via wirings on the substrate of the CPCI bridgeboard 11 to the CPCI rear connectors 11f, 11g, and 11h. The PCIe-PCI bridge 11c is connected via wirings on the substrate of the CPCI bridgeboard 11 to the CPCI rear connectors 11j and 11k.

Fig. 3 is a perspective view of the CPCIe switchboard of the second controller 2 of the control system 10 according to the first embodiment.

The CPCIe switchboard 22 is inserted in the second controller 2, with finger grips 22h and 22j thumbed inwards as illustrated in Fig. 3, and with a CPCIe standard-compliant CPCIe rear connector 22e applied to a slot of the CPCIe backboard.

The front panel 22f of the CPCIe switchboard 22 has the PCIe external cabling standard-compliant PCIe external connector 22g disposed thereto for external connection, and the PCIe external cable 5 is applied to the PCIe external connector 22g.

Disposed on a substrate of the CPCIe switchboard 22 is a PCIe standard-compliant PCIe switch 22a. The PCIe external connector 22g is connected to the PCIe switch 22a via a wiring on the substrate of the CPCIe switchboard 22, and the PCIe switch 22a is connected to the CPCIe rear connector 22e also via wirings on the substrate of the CPCIe switchboard 22.

### <Configuration of control system 10>

Fig. 4 is a block diagram of the control system 10 according to the first embodiment.

As illustrated in Fig. 4, the control system 10 according to the first embodiment includes the first controller 1 and the second controller 2, which are interconnected with each other by the PCIe external cable 5.

The first controller 1 includes the CPCI backboard 15, and the CPCI bridgeboard 11 and I/O boards 12 each applied to the CPCI backboard 15.

The second controller 2 includes the CPCIe backboard 25, and the CPCIe CPU board 21, CPCIe switchboard 22, and I/O boards 23 each applied to the CPCIe backboard 25.

There is a converter 20 made up by a combination of the CPCI bridgeboard 11 of the first controller 1, the CPCIe switchboard 22 of the second controller 2, and the PCIe external cable 5.

The CPCI backboard 15 of the first controller 1 is provided with seven slots, whereto applied is the CPCI bridgeboard 11 and the I/O boards 12, which are cooperative with each other for mutual transmission and reception of signals such as PCI bus signals and user-defined signals.

More specifically, the CPCI backboard 15 has lower slots 15a to be connected with the CPCI rear connectors 11j and 11k, and upper slots 15b to be connected with the CPCI rear connectors 11f, 11g, and 11h, and is cooperative with the CPCI bridgeboard 11 for mutual transmission and reception of PCI bus signals through the lower slots 15a and for those of user-defined signals through the upper slots 15b.

Tthe CPCI bridgeboard 11 includes the PCIe switch 11a, the user-defined signal control device 11b, and the PCIe-PCI bridge 11c.

The PCIe switch 11 a is connected through the PCIe external cable 5 to the second controller 2, and cooperative with the second controller 2 for mutual transmission and reception of PCIe bus signals in accordance with the PCIe bus standard. The PCIe switch 11a is cooperative with the user-defined signal control device 11b and the PCIe-PCI bridge 11c, for mutual transmission and reception of PCIe bus signals in accordance with the PCIe bus standard.

The user-defined signal control device 11b is connected to the CPCI backboard 15, and functions as an end point. The user-defined signal control device 11b is adapted to convert user-defined signals supplied through the upper slots 15b of the CPCI backboard 15 into PCIe bus signals in accordance with the PCIe bus standard, and supply such PCIe bus signals to the PCIe switch 11a.

The user-defined signal control device 11b is adapted to convert PCIe bus signals supplied from the PCIe switch 11a into user-defined signals, and supply such user-defined signals to the CPCI backboard 15.

The PCIe-PCI bridge 11c is adapted to convert PCIe bus signals supplied from the PCIe switch 11a into PCI bus signals to supply to the CPCI backboard 15. The PCIe-PCI bridge 11c is adapted to convert PCI bus signals supplied through the lower slots 15a of the CPCI backboard 15 into PCIe bus signals to supply to the PCIe switch 11a.

The CPCIe backboard 25 of the second controller 2 is provided with seven slots, whereto applied is the CPCIe CPU board 21, the CPCIe switchboard 22, and the I/O boards 23, which are cooperative among them for mutual transmission and reception of PCIe bus signals.

The CPCIe CPU board 21 includes the CPU 21a (Figs. 5A and 5B), and is adapted for a central control for the control system 10.

The CPCIe switchboard 22 includes the PCIe switch 22a.

The PCIe switch 22a is connected through the PCIe external cable 5 to the CPCI bridgeboard 11 of the first controller 1, and cooperative with the CPCI bridgeboard 11 for mutual transmission and reception of PCIe bus signals.

The I/O boards 23 are each applied as an input/output interfacing extension board compliant with the CPCIe standard.

With the foregoing configuration, the control system 10 according to the first embodiment is adapted for interconnection between the CPCI standard-compliant 6U-size first controller 1 and the CPCIe standard-compliant 3U-size second controller 2 to perform transmission and reception of PCIe bus signals in accordance with the PCIe bus standard.

Accordingly, upon replacement of the first controller 1 with the second controller 2, user is allowed to implement a stepwise downsizing to the second controller 2, making effective utilization of resources such as I/O boards 12 applied to the first controller 1.

It is noted that for use of user-defined signals in the first controller 1, the CPU in the CPCIe CPU board 21 of the second controller 2 has to perform transmission and reception of user-defined signals, i.e., writing and reading of user-defined signals, by using PCIe bus signals through the CPCI bridgeboard 11.

### <Actions for transmission and reception of user-defined signals>

Description is now made of actions for transmission and reception of user-defined signals in the control system 10 according to the first embodiment.

Figs. 5A and 5B are block diagrams of circuitry associated with processes for transmission and reception of user-defined signals in the control system 10 according to the first embodiment. Fig. 5A illustrates a situation of the CPCIe CPU board 21 operating to change a user-defined signal from a low to a high. Fig. 5B illustrates a situation of the CPCIe CPU board 21 checking for a user-defined signal switched from a high to a low.

As illustrated in Fig. 5A, when the CPCIe CPU board 21 operates to change a user-defined signal 101 from a low to a high, the CPU 21a of the CPCIe CPU board 21 writes a "1" to a physical address of 0xA0000000 (step S101). The physical address of 0xA0000000 is a PCI memory field assumed to be a base address of the user-defined signal control device 11b.

With the "1" written to address 0, the user-defined signal control device 11b changes the user-defined signal 101 to the high (step S102).

Further, as illustrated in Fig. 5B, when a user-defined signal 102 is changed from a low to a high(step S201), the user-defined signal control device 11b rewrites a register of address 4 from a "1" to a "0", then supplies an interrupt signal to the CPCIe CPU board 21 (step S202).

Given the interrupt signal, the CPU 21 a of the CPCIe CPU board 21 reads the physical address of 0xA0000000, checking that the register of address 4 is rewritten (step S203), whereby the CPU 21a of the CPCIe CPU board 21 recognizes a state of the user-defined signal 102 changed from the "high" to the "low".

Such being the case, in the control system 10 according to the first embodiment, for use of user-defined signals in the first controller 1, the first controller 1 and the second controller 2 are cooperative for mutual transmission and reception of user-defined signals.

It is noted that in the above case the CPU 21 a of the CPCIe CPU board 21 has an access from the PCI memory field to a user-defined signal to thereby perform transmission and reception of user-defined signal, which however is not restrictive, and there may be an access from a PCI configuration field to a user-defined signal to thereby perform transmission and reception of user-defined signal.

### <Replacement procedure>

Description is now made of a replacement procedure of the control system 10 according to the first embodiment.

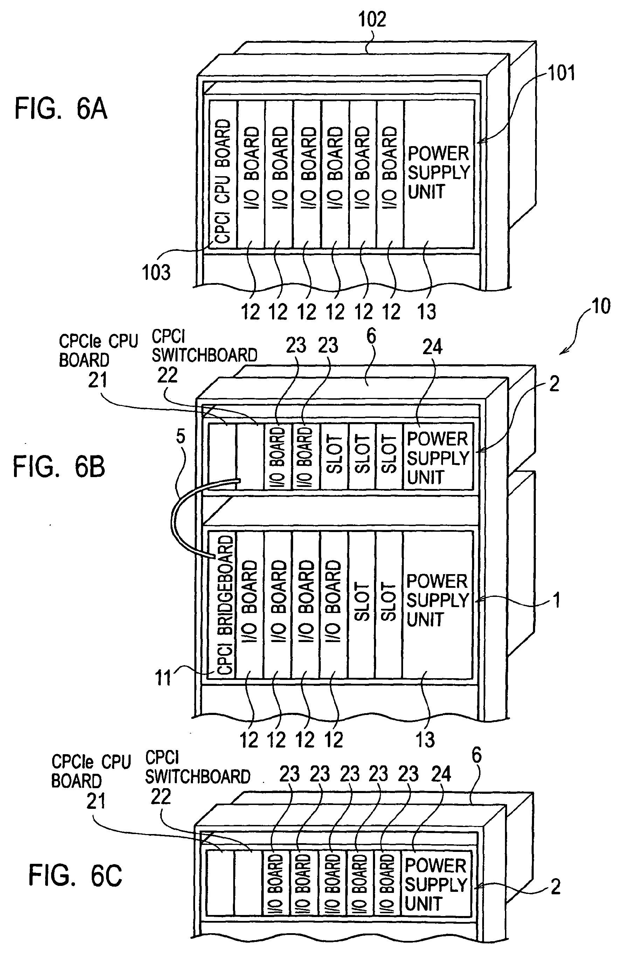

Figs. 6A, 6B, and 6C are illustrations describing the replacement procedure using the control system 10 according to the first embodiment. Fig. 6A is a perspective view of a CPCI standard-compliant 6U-size controller 101 to be replaced and referred herein to a fifth controller, Fig. 6B, a perspective view of the control system 10 according to the first embodiment, and Fig. 6C, a perspective view of the second controller 2 as the replacement is completed.

As illustrated in Fig. 6A, the fifth controller 101 as a CPCI standard-compliant 6U-size controller to be replaced is accommodated in a rack 102.

The fifth controller 101 includes the power supply unit 13, and a CPCI backboard as a backboard configured for application of 6U boards compliant with the CPCI standard, the CPCI backboard being supplied with power from the power supply unit 13.

The CPCI backboard is provided with seven slots compliant with the CPCI standard, whereto a CPCI CPU board 103 and I/O boards 12 are applied in a one-to-one corresponding manner.

For replacement, firstly the CPCI CPU board 103 is removed from a corresponding slot of the CPCI backboard, whereto the CPCI bridgeboard 11 is applied.

And, any I/O board 12 to be replaced is removed.

Then, as illustrated in Fig. 6B, the first controller 1, as the CPCI bridgeboard 11 is applied and the I/O boards to be replaced are removed, is accommodated in the rack 6, together with the second controller 2, and the first controller 1 and the second controller 2 are interconnected by the PCIe external cable 5, whereby the control system 10 according to the first embodiment is made up. It is noted that the rack 6 may be identical to the rack 102.

In the embodiment illustrated in Fig. 6B, two I/O boards 12 are removed to provide the first controller 1, and the second controller 2 has two I/O boards 23 applied thereto.

When a faulty I/O board 12 needs replacement, simply the I/O board 12 to be replaced is removed, and a substitute I/O board 23 therefor is applied to the CPCIe backboard 25 of the second controller 2.This permits effective utilization of resources of the fifth controller 101, such as recycled I/O boards 12 in the first controller 1, allowing for a stepwise replacement to the second controller 2.

Finally, as illustrated in Fig. 6C, the first controller 1 and the PCIe external cable 5 are to be removed, having simply the second controller 2 left as it will then be, to complete the replacement.

As will be seen from the foregoing description, according to the first embodiment of the present invention, a control system 10 works with a CPCI standard-compliant 6U-size controller 1 and a CPCIe standard-compliant 3U-size controller 2 interconnected with each other, and along with replacement from the first controller 1 in current service to the second controller 2, it is allowed for the user to effectively utilize remaining resources such as I/O boards 12 in the first controller 1, while implementing a downsizing to the second controller 2.

More specifically, according to the first embodiment of the present invention, the control system 10 includes a converter 20 that comprises: a CPCIe switchboard 22 configured to be applied to one slot out of slots provided to a CPCIe backboard 25 being a backboard of the 3U size compliant with the CPCIe standard, and cooperative with a combination of a CPCIe CPU board 21 and a CPCIe extension board (as an I/O board 23) applied to other slots else than the slot provided to the CPCIe backboard 25, for mutual transmission and reception of PCIe bus signals in accordance with the PCIe bus standard; and a CPCI bridgeboard 11 configured to be applied to one slot out of slots provided to a CPCI backboard 15 being a backboard of the 6U size compliant with the CPCI standard, and cooperative with a CPCI extension board (as an I/O board 12) applied to another slot else than the slot provided to the CPCI backboard 15 for mutual transmission and reception of PCI bus signals in accordance with the PCI bus standard, and connected to the CPCIe switchboard 22 via a PCIe external cabling standard-compliant external cable 5 connected to a PCIe external cabling standard-compliant connector 22g disposed to a front panel 22f, and cooperative with the CPCIe switchboard 22 for mutual transmission and reception of PCIe bus signals in accordance with the PCIe bus standard, whereby along with replacement from the first controller 1 in current service to the second controller 2, it is allowed for the user to effectively utilize remaining resources such as I/O boards 12 in the first controller 1, while implementing a downsizing to the second controller 2..

Further, any and all remaining CPCI boards such as I/O boards in the first controller 1 can be put in a continued service, as circumstances require, permitting such an operation to be made along the replacement, as utilizing necessary CPCI boards, and removing simply a faulty CPCI board, substituting a 3U-size CPCIe board therefor, allowing for effective utilization of remaining resources in the first controller 1, to implement a stepwise downsizing to the second controller 2.

In a control system including a mixed set of CPCI boards and CPCIe boards applied to a backboard in accordance with the CPCIe standard, a bridgeboard applied to the backboard for conversion between PCI bus signal and PCIe bus signal is unable to make a conversion to a 64-bit PCI bus signal, so such the hybrid system cannot afford application of any 64-bit version CPCI board. However, according to the first embodiment of the present invention, the control system 10 is put in service with the CPCI standard-compliant first controller 1 and the CPCIe standard-compliant second controller 2 interconnected with each other, thus permitting a continued use of 64-bit version CPCI board.

Further, even in use of an old-fashioned interface signal as a user-defined signal in CPIC boards applied to the CPCI standard-compliant 6U-size first controller 1, according to the first embodiment of the present invention, in which transmission as well as reception of information of user-defined signal is permitted by a PCIe bus between the CPCI standard-compliant 6U-size first controller 1 and the CPCIe standard-compliant 3U-size second controller 2, the control system 10 can do without introducing the old-fashioned interface signal into a new CPCIe backboard.

### (Second Embodiment)

Although in the control system 10 according to the first embodiment, the second controller 2 has a configuration including a CPCIe CPU board 21, a CPCIe switchboard 22, and I/O boards 23, this is not restrictive, and there may be a configuration composed of a CPCIe CPU board 21 and I/O boards 23.

Although in the control system 10 according to the first embodiment, the first controller 2 has a configuration including a CPCI bridgeboard 11 for conversion between a user-defined signal and a PCIe bus signal, this is not restrictive, and there may be a configuration including a CPCI bridgeboard 11 for conversion between a user-defined signal and a PCI bus signal.

In this respect, as a second embodiment of the present invention, there will be described a control system including a CPCIe standard-compliant controller that has a CPCIe CPU board and I/O boards, and a CPCI standard-compliant controller that has a CPCI bridgeboard for conversion between a user-defined signal and a PCI bus signal.

### <Outline of the control system>

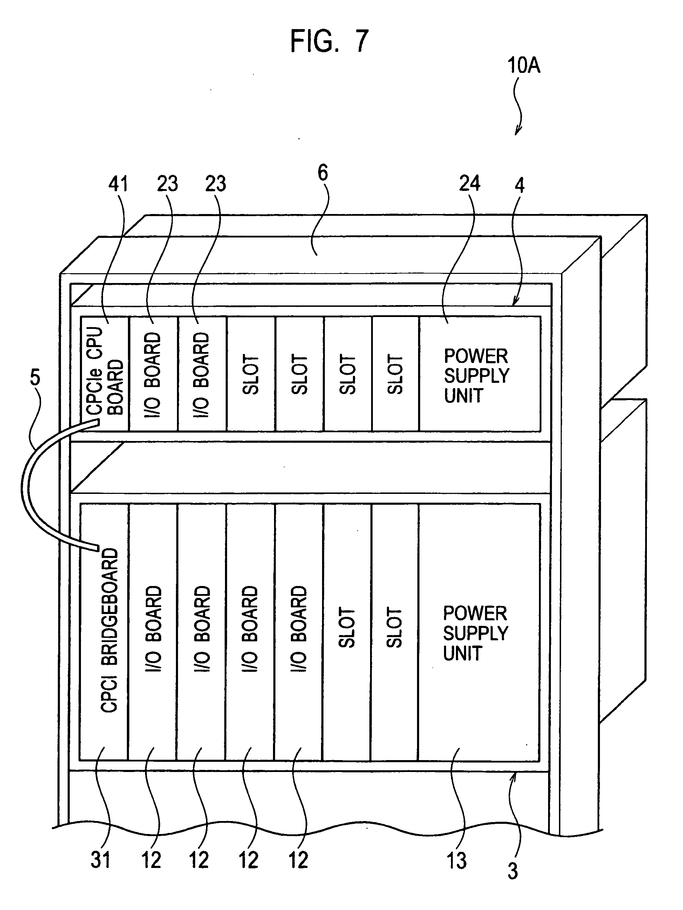

Fig. 7 is a perspective view of a control system 10A according to the second embodiment.

As illustrated in Fig.7, the control system 10A according to the second embodiment includes a third controller 3 and a fourth controller 4, the third controller 3 and the fourth controller 4 being accommodated in a rack 6.

The third controller 3 and the fourth controller 4 are connected to each other via a PCIe external cable 5.

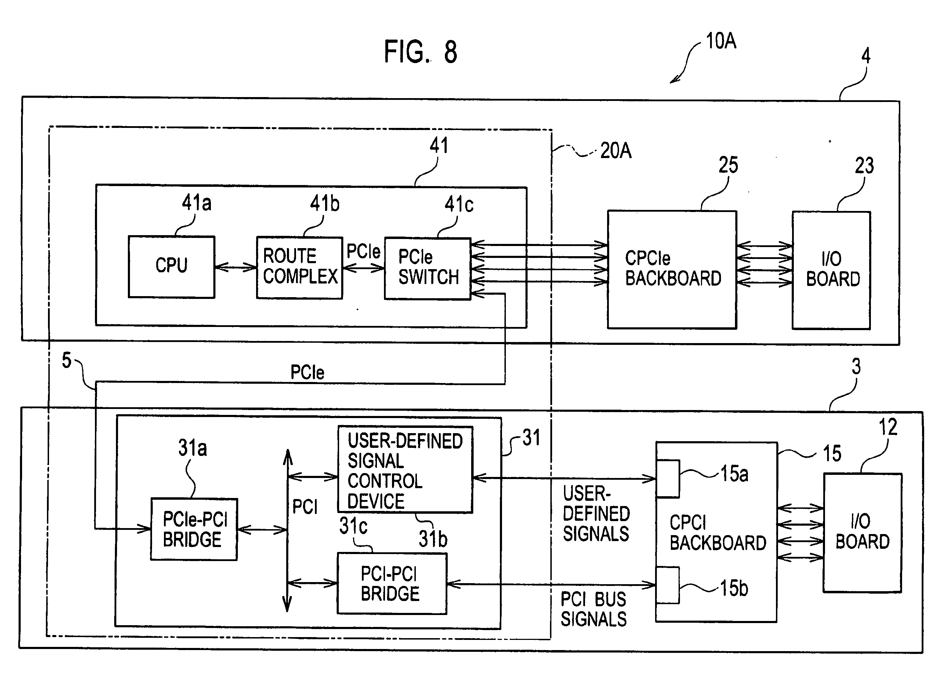

The third controller 3 has a power supply unit 13, and a CPCI backboard 15 (Fig. 8) being a 6U-size backboard compliant with the CPCI standard, the CPCI backboard being supplied with power from the power supply unit 13.

The CPCI backboard is provided with seven slots compliant with the CPCI standard, whereto a CPCI bridgeboard 31 and I/O boards 12 are applied in a one-to-one corresponding manner.

The CPCI bridgeboard 31 is cooperative with the I/O boards 12 applied to other slots provided to the CPCI backboard, for mutual transmission and reception of signals such as user-defined signals and PCI bus signals in accordance with a PCI bus standard.

The CPCI bridgeboard 31 has, at the front relative to the CPCI backboard, i.e., at a front panel thereof, a PCIe external cabling standard-compliant PCIe external connector disposed thereto, and is connected to the fourth controller 4 through the PCIe external connector and the PCIe external cable 5 connected thereto, and cooperative with the fourth controller 4 for mutual transmission and reception of PCIe bus signals in accordance with the PCIe bus standard.

The I/O boards 12, four in total number in the embodiment illustrated in Fig. 7, are each applied to the CPCI backboard, as an input/output interfacing extension board compliant with the CPCI standard.

The fourth controller 4 has a power supply unit 24, and a CPCIe backboard 25 (Fig. 8) being a 3U-size backboard compliant with the CPCIe standard, the CPCIe backboard being supplied with power from the power supply unit 24.

The CPCIe backboard is provided with seven slots compliant with the CPCIe standard, whereto a CPCIe CPU board 41 and I/O boards 23 are applied in a one-to-one corresponding manner.

The CPCIe CPU board 41 has a CPU 41 a (Fig. 8) incorporated therein, and is operative for a central control for the control system 10A.

The CPCIe C'PU board 41 is cooperative with the I/O boards 23 applied to other slots provided to the CPCIe backboard, to perform mutual transmission and reception of PCIe bus signals in accordance with the PCIe bus standard, depending on instructions of the incorporated CPU. The CPCIe CPU board 41 has, at a front panel thereof, a PCIe external cabling standard-compliant PCIe external connector disposed thereto, and is connected to the CPCI bridgeboard -31 through the PCIe external connector and the PCIe external cable 5 connected thereto, and cooperative with the CPCI bridgeboard 31 for mutual transmission and reception of PCIe bus signals in accordance with the PCIe bus standard.

The I/O boards 23, two in total number in the embodiment illustrated in Fig. 7, are each applied to the CPCIe backboard, as an input/output interfacing extension board compliant with the CPCIe standard.

### <Configuration of control system I0A>

Fig. 8 is a block diagram of the control system 10A according to the second embodiment.

As illustrated in Fig. 8, the control system 10A according to the second embodiment includes the third controller 3 and the fourth controller 4, which are interconnected with each other by the PCIe external cable 5.

The third controller 3 includes the CPCI backboard 15, and the CPCI bridgeboard 31 and I/O boards 12 each applied to the CPCI backboard 15.

The fourth controller 4 includes the CPCIe backboard 25, and the CPCIe CPU board 41 and I/O boards 23 each applied to the CPCIe backboard 25.

There is a converter 20A made up by a combination of the CPCI bridgeboard 31 of the third controller 3, the CPCIe CPU board 41 of the fourth controller 4, and the PCIe external cable 5.

The CPCI backboard 15 of the third controller 3 is identical to the CPCI backboard 15 of the first controller 1 in the control system 10 according to the first embodiment.

The CPCI bridgeboard 31 includes a PCIe-PCI bridge 31a, a user-defined signal control device 31b, and a PCI-PCI bridge 31c.

The PCIe-PCI bridge 31a is connected through the PCIe external cable 5 to the fourth controller 4, and through internal wirings on the CPCI backboard 15 to the user-defined signal control device 31b and the PCI-PCI bridge 31c. The PCIe-PCI bridge 31 a is adapted to convert PCIe bus signals supplied from the fourth controller 4 into PCI bus signals to supply to the user-defined signal control device 31b or the PCI-PCI bridge 31c, and convert PCI bus signals supplied from the user-defined signal control device 31b or the PCI-PCI bridge 31c into PCIe bus signals to supply to the fourth controller 4.

The user-defined signal control device 31b is connected to the CPCI backboard 15, and adapted to convert user-defined signals supplied through upper slots 15a of the CPCI backboard 15 into PCI bus signals in accordance with the PCI bus standard, and supply such PCI bus signals to the PCIe-PCI bridge 31a.

The user-defined signal control device 31b is adapted to convert PCI bus signals supplied from the PCIe-PCI bridge 31a into user-defined signals, and supply such user-defined signals to the CPCI backboard 15.

The PCI-PCI bridge 31c is connected to lower slots 15b of the CPCI backboard 15, and cooperative with the CPCI backboard 15 for mutual transmission and reception of PCI bus signals in accordance with the PCI bus standard.

The CPCIe backboard 25 of the fourth controller 4 is identical to the CPCIe backboard 25 of the second controller 2 in the control system 10 according to the first embodiment.

The CPCIe CPU board 21 includes a CPU 41 a, a route complex 41b, and a PCIe switch 41c.

The CPU 41 a is operative for a central control for the control system 10A.

The route complex 41b is positioned at the highest level of a PCIe tree structure, and interconnects the CPU 41 a and the PCIe switch 41 c with each other.

The PCIe switch 41 c is connected through the PCIe external cable 5 to the CPCI bridgeboard 31 of the third controller 3, and cooperative with the CPCI bridgeboard 31 for mutual transmission and reception of PCIe bus signals in accordance with the PCIe bus standard.

The I/O boards 23 are each applied as an input/output interfacing extension board compliant with the CPCIe standard.

With the foregoing configuration, the control system 10A according to the second embodiment is adapted for interconnection between the CPCI standard-compliant 6U-size third controller 3 and the CPCIe standard-compliant 3U-size fourth controller 4 to perform transmission and reception of PCIe bus signals in accordance with the PCIe bus standard.

Accordingly, upon replacement of the third controller 3 with the fourth controller 4, user is allowed to implement a stepwise downsizing to the fourth controller 4, making effective utilization of resources such as I/O boards 12 applied to the third controller 3.

More specifically, according to the second embodiment of the present invention, the control system 10A includes a converter 20A that comprises: a CPCIe CPU board 41 configured to be applied to one slot out of slots provided to a CPCIe backboard 25 being a backboard of the 3U size compliant with the CPCIe standard, and cooperative with a CPCIe extension board (as an I/O board 23) applied to another slot else than the slot provided to the CPCIe backboard 25, to perform mutual transmission and reception of PCIe bus signals in accordance with the PCIe bus standard, depending instructions of an incorporated CPU 41 a; and a CPCI bridgeboard 31 configured to be applied to one slot out of slots provided to a CPCI backboard 15 being a backboard of the 6U size compliant with the CPCI standard, and cooperative with a CPCI extension board (as an I/O board 12) applied to another slot else than the slot provided to the CPCI backboard 15 for mutual transmission and reception of PCI bus signals in accordance with the PCI bus standard, and connected to the CPCIe CPU board 41 via a PCIe external cabling standard-compliant external cable 5 connected to a PCIe external cabling standard-compliant connector disposed to a front panel, and cooperative with the CPCIe CPU board 41 for mutual transmission and reception of PCIe bus signals in accordance with the PCIe bus standard, whereby along with replacement from the third controller 3 to the fourth controller 4, it is allowed for the user to effectively utilize remaining resources such as I/O boards 12 in the third controller 3, while implementing a stepwise downsizing to the fourth controller 4.

Further, in the control system 10A according to the second embodiment of the present invention, the CPCIe CPU board 41 including a CPU 41a and a PCIe switch 41c is applied to one slot of the PCIe backboard, thus providing empty slots that can be used for additional expansion boards to be applied to the CPCIe backboard.

It is noted that the control system 10A according to the second embodiment of the present invention has user-defined signal transmission and reception processes and controller replacement procedure identical in concept to those in the control system 10 according to the first embodiment of the present invention.

Further, according to the second embodiment of the present invention, the control system 10A has a configuration including a third controller 3, and a fourth controller 4 interconnected with the third controller 3 by a PCIe external cable 5, which however is not restrictive. For instance, there may be a configuration including a first controller 1 according to the first embodiment of the present invention, and a fourth controller 4 interconnected with the first controller 1 by a PCIe external cable 5. More specifically, it may include a converter comprising a CPCI bridgeboard 11 provided in the first controller 1, a CPCIe CPU board 41 provided in the fourth controller 4, and the PCIe external cable 5. This allows, along with replacement from the first controller 1 to the fourth controller 4, the user to effectively utilize remaining resources such as I/O boards 12 in the first controller 1, while implementing a stepwise downsizing to the fourth controller 4.

Further, there may be a configuration including the third controller 3, and a second controller 2 according to the first embodiment of the present invention, the second controller 2 being interconnected with the third controller 3 by a PCIe external cable 5. More specifically, it may include a converter comprising a CPCI bridgeboard 31 provided in the third controller 3, a CPCIe switchboard 22 provided in the second controller 2, and the PCIe external cable 5. This allows, along with replacement from the third controller 3 to the second controller 2, the user to effectively utilize remaining resources such as I/O boards 12 in the third controller 3, while implementing a stepwise downsizing to the second controller 4.

According to the present invention, upon replacement from a CompactPCI standard-compliant 6U-size controller to a CompactPCI Express standard-compliant 3U-size controller, it is possible to implement a stepwise downsizing from the 6U size to the 3U size, allowing for a maximized utilization of existing equipment.

The present invention is applicable to controllers for PA uses, such as those in petrochemical or steel plants, or FA (Factory Automation) uses in production or assembly lines.

## Claims

1. A converter comprising:
a CPCIe switchboard (22) configured to be applied to one slot out of slots provided to a CPCIe backboard (25) being a backboard of a 3U size compliant with a CPCIe standard, and cooperative with a combination of a CPCIe CPU board and a CPCIe extension board applied to other slots else than the slot provided to the CPCIe backboard for mutual transmission and reception of PCIe bus signals in accordance with a PCIe bus standard; and
a CPCI bridgeboard (11) configured to be applied to one slot out of slots provided to a CPCI backboard (15) being a backboard of a 6U size compliant with a CPCI standard, and cooperative with a CPCI extension board applied to another slot else than the slot provided to the CPCI backboard for mutual transmission and reception of PCI bus signals in accordance with a PCI bus standard, and connected to the CPCIe switchboard via a PCIe external cabling standard-compliant external cable connected to a PCIe external cabling standard-compliant connector disposed to a front panel, and cooperative with the CPCIe switchboard for mutual transmission and reception of PCIe bus signals in accordance with the PCIe bus standard.

2. A converter comprising:
a CPCIe CPU board (21) configured to be applied to one slot out of slots provided to a CPCIe backboard being a backboard of a 3U size compliant with a CPCIe standard, and cooperative with a CPCIe extension board applied to another slot else than the slot provided to the CPCIe backboard for mutual transmission and reception of PCIe bus signals in accordance with a PCIe bus standard, depending on instructions of an incorporated CPU; and
a CPCI bridgeboard (11) configured to be applied to one slot out of slots provided to a CPCI backboard being a backboard of a 6U size compliant with a CPCI standard, and cooperative with a CPCI extension board applied to another slot else than the slot provided to the CPCI backboard for mutual transmission and reception of PCI bus signals in accordance with a PCI bus standard, and connected to the CPCIe CPU board via a PCIe external cabling standard-compliant external cable connected to a PCIe external cabling standard-compliant connector disposed to a front panel, and cooperative with the CPCIe CPU board for mutual transmission and reception of PCIe bus signals in accordance with the PCIe bus standard.

3. The converter according to claim 1, wherein the CPCI bridgeboard (11) comprises:
a user-defined signal control device (11b) configured for connection to the CPCI backboard (15) to convert a user-defined signal being a signal capable of a setting for control by a user as supplied from the CPCI backboard into a PCIe bus signal in accordance with the PCIe bus standard, and convert a supplied PCIe bus signal into a user-defined signal; and
a PCIe switch (11a) configured for connection to the CPCIe switchboard via the external cable and connection to the user-defined signal control device via a PCIe bus standard-compliant internal wiring.

4. The converter according to claim 2, wherein the CPCI bridgeboard (11) comprises:
a user-defined signal control device (11b) configured for connection to the CPCI backboard to convert a user-defined signal being a signal capable of a setting for control by a user as supplied from the CPCI backboard into a PCIe bus signal in accordance with the PCIe bus standard, and convert a supplied PCIe bus signal into a user-defined signal; and
a PCIe switch (11a) configured for connection to the CPCIe CPU board via the external cable and connection to the user-defined signal control device via a PCIe bus standard-compliant internal wiring.

5. The converter according to claim 1, wherein the CPCI bridgeboard (11) comprises:
a user-defined signal control device configured for connection to the CPCI backboard (15) to convert a user-defined signal being a signal capable of a setting for control by a user as supplied from the CPCI backboard into a PCIe bus signal in accordance with the PCIe bus standard, and convert a supplied PCIe bus signal into a user-defined signal; and
a PCIe-PCI bridge (11c) configured for connection to the CPCIe switchboard via the external cable and connection to the user-defined signal control device via a PCI bus standard-compliant internal wiring, to convert a PCIe bus signal supplied from the CPCIe switchboard into a PCI bus signal for supply to the user-defined signal control device, and convert a PCI bus signal supplied from the user-defined signal control device into a PCIe bus signal for supply to the CPCIe switchboard.

6. The converter according to claim 2, wherein the CPCI bridgeboard (11) comprises:
a user-defined signal control device (11) configured for connection to the CPCI backboard (15) to convert a user-defined signal being a signal capable of a setting for control by a user as supplied from the CPCI backboard into a PCI bus signal in accordance with the PCI bus standard, and convert a supplied PCI bus signal into a user-defined signal; and
a PCIe-PCI bridge (11c) configured for connection to the CPCIe CPU board via the external cable and connection to the user-defined signal control device via a PCI bus standard-compliant internal wiring, to convert a PCIe bus signal supplied from the CPCIe CPU board into a PCI bus signal for supply to the user-defined signal control device, and convert a PCI bus signal supplied from the user-defined signal control device into a PCIe bus signal for supply to the CPCIe CPU board.

7. A control system including a first controller (1) compliant with a CPCI standard, and a second controller (2) compliant with a CPCIe standard and connected to the first controller via a PCIe external cabling standard-compliant external cable, wherein
the second controller (2) comprises:
a CPCIe backboard (25) being a backboard of a 3U size compliant with the CPCIe standard and provided with a plurality of slots;
a CPCIe standard-compliant CPCIe CPU board having a CPU incorporated therein, and applied to one slot out of the plurality of slots the CPCIe backboard is provided with;
a set of one or more CPCIe standard-compliant CPCIe extension boards applied to one or more slots out of the plurality of slots the CPCIe backboard is provided with; and
a CPCIe switchboard (22) configured to be applied to one slot out of the plurality of slots the CPCIe backboard is provided with, and cooperative with the CPCIe CPU board and the set of one or more CPCIe extension boards for mutual transmission and reception of PCIe bus signals in accordance with a PCIe bus standard, and the first controller comprises:
a CPCI backboard (15) being a backboard of a 6U size compliant with the CPCI standard;
a set of one or more CPCI standard-compliant CPCI extension boards applied to one or more slots out of a plurality of slots the CPCI backboard is provided with; and
a CPCI bridgeboard (11) configured to be applied to one or more slots out of the plurality of slots the CPCI backboard is provided with, and cooperative with the set of one or more CPCI extension boards for mutual transmission and reception of PCI bus signals in accordance with a PCI bus standard, and connected to the CPCIe switchboard via the external cable connected to a PCIe external cabling standard-compliant connector disposed to a front panel, and cooperative with the CPCIe switchboard for mutual transmission and reception of PCIe bus signals in accordance with the PCIe bus standard.

8. A control system including a first controller (1) compliant with a CPCI standard, and a second controller (2) compliant with a CPCIe standard and connected to the first controller via a PCIe external cabling standard-compliant external cable, wherein
the second controller (2) comprises:
a CPCIe backboard (25) being a backboard of a 3U size compliant with the CPCIe standard and provided with a plurality of slots;
a set of one or more CPCIe standard-compliant CPCIe extension boards applied to one or more slots out of the plurality of slots the CPCIe backboard is provided with; and
a CPCIe CPU board configured to be applied to one slot out of the plurality of slots the CPCIe backboard is provided with, and cooperative with the set of one or more CPCIe extension boards for mutual transmission and reception of PCIe bus signals in accordance with a PCIe bus standard, depending on instructions of an incorporated CPU, and the first controller comprises:
a CPCI backboard (15) being a backboard of a 6U size compliant with the CPCI standard;
a set of one or more CPCI standard-compliant CPCI extension boards applied to one or more slots out of a plurality of slots the CPCI backboard is provided with; and
a CPCI bridgeboard (11) configured to be applied to one or more slots out of the plurality of slots the CPCI backboard is provided with, and cooperative with the set of one or more CPCI extension boards for mutual transmission and reception of PCI bus signals in accordance with a PCI bus standard, and connected to the CPCIe CPU board via a PCIe external cabling standard-compliant external cable connected to a PCIe external cabling standard-compliant connector disposed to a front panel, and cooperative with the CPCIe CPU board for mutual transmission and reception of PCIe bus signals in accordance with the PCIe bus standard.

## Patentansprüche

1. Wandler, umfassend:
ein CPCIe-Schaltboard (22), das konfiguriert ist, an einem Anschluss von Anschlüssen angebracht zu werden, die einem CPCIe-Backboard (25) bereitgestellt sind, wobei es sich um ein Backboard einer 3U-Größe konform mit einem CPCIe-Standard handelt, und mit einer Kombination eines CPCIe-CPU-Board und einem CPCI-Erweiterungsboard zusammenwirkt, die an anderen Anschlüssen als dem Anschluss angelegt sind, der für das CPCIe-Backboard bereitgestellt ist, für eine gegenseitige Übertragung und Empfang von PCIe-Bus-Signalen gemäß einem PCIe-Bus-Standard; und
einem CPCI-Bridgeboard (11), das konfiguriert ist, um an einem Anschluss von Anschlüssen angelegt zu werden, die einem CPCI-Backboard (15) bereitgestellt sind, wobei es sich um ein Backboard einer 6U-Größe konform mit einem CPCI-Standard handelt, und mit einem CPCI-Erweiterungsboard zusammenwirkt, das an einem anderen Anschluss als dem Anschluss angelegt ist, der für das CPCI-Backboard bereitgestellt ist, für eine gegenseitige Übertragung und Empfang von PCI-Bus-Signalen gemäß einem PCI-Bus-Standard, und das mit dem CPCIe-Schaltboard verbunden ist, über ein PCIe-Externverdrahtung-Standard-konformes externes Kabel, das mit einem PCIe-Externverdrahtung-Standard-konformen Verbindungselement verbunden ist, das an einem Fronpaneel angeordnet ist, und mit dem CPCIe-Schaltboard zusammenwirkt, für eine gegenseitige Übertragung und Empfang von PCIe-Bus-Signalen gemäß dem PCIe-Bus-Standard.

2. Wandler, umfassend:
ein CPCIe-CPU-Board (21), das konfiguriert ist, um an einem Anschluss von Anschlüssen angelegt zu werden, die einem CPCIe-Backboard bereitgestellt sind, wobei es sich um ein Backboard einer 3U-Größe konform mit einem CPCIe-Standard handelt, und mit einem CPCIe-Erweiterungsboard zusammenwirkt, das an einem anderen Anschluss außer dem Anschluss angelegt ist, der dem CPCIe-Backboard bereitgestellt ist, für eine gegenseitige Übertragung und Empfang von PCIe-Bus-Signalen gemäß einem PCIe-Bus-Standard, in Abhängigkeit von Anweisungen einer eingebauten CPU; und
ein CPCI-Bridgeboard (11), das konfiguriert ist, um an einem Anschluss von Anschlüssen angelegt zu werden, die einem CPCI-Backboard bereitgestellt sind, wobei es sich um ein Backboard einer 6U-Größe konform mit einem CPCI-Standard handelt, und mit einem CPCI-Erweiterungsboard zusammenwirkt, das an einem anderen Anschluss außer dem Anschluss angelegt ist, der für das CPCI-Backboard bereitgestellt ist, für eine gegenseitige Übertragung und Empfang von PCI-Bus-Signalen gemäß einem PCI-Bus-Standard, und mit dem CPCIe-CPU-Board verbunden ist, über ein PCIe-Externverdrahtung-Standard-konformes externes Kabel, das mit einem PCIe-Externverdrahtung-Standard-konformes Verbindungselement verbunden ist, das an einem Vorderpaneel angeordnet ist, und mit dem CPCIe-CPU-Board zusammenwirkt, für eine gegenseitige Übertragung und Empfang von PCIe-Bus-Signalen gemäß dem PCIe-Bus-Standard.

3. Wandler nach Anspruch 1, wobei das CPCI-Bridgeboard (11) umfasst:
eine Nutzer-Definierte-Signalsteuervorrichtung (11b), die konfiguriert ist für eine Verbindung mit dem CPCI-Backboard (15), um ein Nutzer-definiertes Signal zu wandeln, bei dem es sich um ein Signal handelt, mit dem eine Einstellung für eine Steuerung durch einen Nutzer durchgeführt werden kann, wie von dem CPCI-Backboard geliefert, in ein PCIe-Bus-Signal gemäß dem PCIe-Bus-Standard, und zum Wandeln eines gelieferten PCIe-Bus-Signals in ein Nutzer-definiertes Signal; und
einen PCIe-Schalter (11a), der konfiguriert ist für eine Verbindung mit dem CPCIe-Schaltboard, über das externe Kabel, und für eine Verbindung mit der Nutzer-Definierte-Signalsteuervorrichtung über eine PCIe-Bus-Standard-konforme interne Verdrahtung.

4. Wandler nach Anspruch 2, wobei das CPCI-Bridgeboard (11) umfasst:
eine Nutzer-Definierte-Signalsteuervorrichtung (11b), die konfiguriert ist für eine Verbindung mit dem CPCI-Backboard, zum Wandeln eines Nutzer-definierten Signals, bei dem es sich um ein Signal handelt, das eine Einstellung zur Steuerung durch einen Nutzer durchführen kann, wie von dem CPCI-Backboard geliefert, in ein PCIe-Bus-Signal gemäß dem PCIe-Bus-Standard, und zum Wandeln eines gelieferten PCIe-Bus-Signals in ein Nutzer-definiertes Signal; und
einen PCIe-Schalter (11a), der konfiguriert ist für eine Verbindung mit dem CPCIe-CPU-Board über das externe Kabel und eine Verbindung mit der Nutzer-Definierten-Signalsteuervorrichtung über eine PCIe-Bus-Standardkonforme interne Verdrahtung.

5. Wandler nach Anspruch 1, wobei das CPCI-Bridgeboard (11) umfasst:
eine Nutzer-Definierte-Signalsteuervorrichtung, die konfiguriert ist für eine Verbindung mit dem CPCI-Backboard (15), zum Wandeln eines Nutzer-definierten Signals, bei dem es sich um ein Signal handelt, mit dem eine Einstellung für eine Steuerung durch einen Nutzer durchgeführt werden kann, wie von dem CPCI-Backboard geliefert, in ein PCIe-Bus-Signal gemäß dem PCIe-Bus-Standard, und zum Wandeln eines gelieferten PCIe-Bus-Signals in ein Nutzer-definiertes Signal; und
ein PCIe-PCI-Brückenelement (11c), das konfiguriert ist für eine Verbindung mit dem CPCIe-Schaltboard über das externe Kabel, und für eine Verbindung mit der Nutzer-Definierte-Signalsteuervorrichtung über eine PCI-Bus-Standard-konforme interne Verdrahtung, zum Wandeln eines PCIe-Bus-Signals, das von dem CPCIe-Schaltboard geliefert wird, in ein PCI-Bus-Signal zur Lieferung an die Nutzer-Definierte Signalsteuervorrichtung, und zum Wandeln eines PCI-Bus-Signals, das von der Nutzer-Definierte-Signalsteuervorrichtung geliefert wird, in ein PCIe-Bus-Signal zum Liefern an das CPCIe-Schaltboard.

6. Wandler nach Anspruch 2, wobei das CPCI-Bridgeboard (11) umfasst:
eine Nutzer-Definierte-Signalsteuervorrichtung (11), die konfiguriert ist für eine Verbindung mit dem CPCI-Backboard (15) zum Wandeln eines Nutzer-definierten Signals, bei dem es sich um ein Signal handelt, mit dem eine Einstellung durchgeführt werden kann, für eine Steuerung durch einen Nutzer, wie von dem CPCI-Backboard geliefert, in ein PCI-Bus-Signal gemäß dem PCI-Bus-Standard, und zum Wandeln eines gelieferten PCI-Bus-Signals in ein Nutzer-Definiertes Signal; und
ein PCIe-PCI-Brückenelement (11c), das konfiguriert ist für eine Verbindung mit dem CPCIe-CPU-Board, über das externe Kabel, und für eine Verbindung mit der Nutzer-Definierte-Signalsteuervorrichtung über eine PCI-Bus-Standard-konforme interne Verdrahtung, zum Wandeln eines PCIe-Bus-Signals, das von dem CPCIe-CPU-Board geliefert wird, in ein PCI-Bus-Signal zur Lieferung an die Nutzer-Definierte-Signalsteuervorrichtung, und zum Wandeln eines PCI-Bus-Signals, das von der Nutzer-Definierte-Signalsteuervorrichtung geliefert wird, in ein PCIe-Bus-Signal, zur Lieferung an das CPCIe-CPU-Board.

7. Steuersystem mit einer ersten Steuereinrichtung (1), konform mit einem CPCI-Standard, und einer zweiten Steuereinrichtung (2), konform mit einem CPCIe-Standard, die mit der ersten Steuereinrichtung über ein PCIe-Externverdrahtung-Standard-konformes externes Kabel verbunden ist, wobei
die zweite Steuervorrichtung (2) umfasst:
ein CPCIe-Backboard (25), bei dem es sich um ein Backboard einer 3U-Größe konform mit dem CPCIe-Standard handelt und das mit einer Vielzahl von Anschlüssen bereitgestellt ist;
ein CPCIe-Standard-Konformes-CPCIe-CPU-Board mit einer darin eingebauten CPU, und das an einem Anschluss der Vielzahl von Anschlüssen angelegt wird, an denen das CPCIe-Backboard bereitgestellt ist;
eine Gruppe von einem oder mehreren CPCIe-Standard-Konformen-CPCIe-Erweiterungsboards, die an einem oder mehreren Anschlüssen der Vielzahl von Anschlüssen angelegt sind, an denen das CPCIe-Backboard bereitgestellt ist; und
ein CPCIe-Schaltboard (22), das konfiguriert ist, um an einem Anschluss der Vielzahl von Anschlüssen angelegt zu werden, an denen das CPCIe-Backboard bereitgestellt ist, und mit dem CPCIe-CPU-Board und der Gruppe von einem oder mehreren CPCIe-Erweiterungsboards zusammenwirkt, für eine gegenseitige Übertragung und Empfang von PCIe-Bus-Signalen gemäß einem PCIe-Bus-Standard, und wobei die erste Steuereinrichtung umfasst:
ein CPCI-Backboard (15), bei dem es sich um ein Backboard einer 6U-Größe konform mit dem CPCI-Standard handelt;
eine Gruppe von einem oder mehreren CPCI-Standardkonformen CPCI-Erweiterungsboards, die an einem oder mehreren Anschlüssen der Vielzahl von Anschlüssen angelegt sind, an denen das CPCI-Backboard bereitgestellt ist; und
ein CPCI-Bridgeboard (11), das konfiguriert ist, um an einem oder mehreren Anschlüssen der Vielzahl von Anschlüssen angelegt zu werden, an denen das CPCI-Backboard bereitgestellt ist, und mit der Gruppe von einem oder mehreren CPCI-Erweiterungsboards zusammenwirkt, für eine gegenseitige Übertragung und Empfang von PCI-Bus-Signalen gemäß einem PCI-Bus-Standard, und mit dem CPCIe-Schaltboard über das externe Kabel verbunden ist, das mit einem PCIe-Externverdrahtung-Standard-konformes Verbindungselement verbunden ist, das an einem Vorderpaneel angeordnet ist, und mit dem CPCIe-Schaltboard zusammenwirkt, für eine gegenseitige Übertragung und Empfang von PCIe-Bus-Signalen gemäß dem PCIe-Bus-Standard.

8. Steuersystem mit einer ersten Steuereinrichtung (1), konform mit einem CPCI-Standard, und einer zweiten Steuereinrichtung (2), konform mit einem CPCIe-Standard, die mit der ersten Steuereinrichtung über ein PCIe-Externverdrahtung-Standard-konformes externes Kabel verbunden ist, wobei
die zweite Steuereinrichtung (2) umfasst:
ein CPCIe-Backboard (25), bei dem es sich um ein Backboard einer 3U-Größe konform mit dem CPCIe-Standard handelt, und das mit einer Vielzahl von Anschlüssen bereitgestellt ist;
eine Gruppe von einem oder mehreren CPCIe-Standard-Konformen-CPCIe-Erweiterungsboards, die an einem oder mehreren Anschlüssen der Vielzahl von Anschlüssen angelegt sind, an denen das CPCIe-Backboard bereitgestellt ist; und
ein CPCIe-CPU-Board, das konfiguriert ist, um an einem Anschluss der Vielzahl von Anschlüssen angelegt zu werden, an denen das CPCIe-Backboard bereitgestellt ist, und mit der Gruppe von einem oder mehreren CPCIe-Erweiterungsboards zusammenwirkt, für eine gegenseitige Übertragung und Empfang von PCIe-Bus-Signalen gemäß einem PCIe-Bus-Standard, in Abhängigkeit von Anweisungen einer eingebauten CPU, und wobei die erste Steuereinrichtung umfasst:
ein CPCI-Backboard (15), bei dem es sich um ein Backboard einer 6U-Größe konform mit dem CPCI-Standard handelt;
eine Gruppe von einem oder mehreren CPCI-Standardkonformen CPCI-Erweiterungsboards, die an einem oder mehreren Anschlüssen der Vielzahl von Anschlüssen angelegt werden, an denen das CPCI-Backboard bereitgestellt ist; und
ein CPCI-Bridgeboard (11), das konfiguriert ist, um an einem oder mehreren Anschlüssen der Vielzahl von Anschlüssen angelegt zu werden, an denen das CPCI-Backboard bereitgestellt ist, und mit der Gruppe von einem oder mehreren CPCI-Erweiterungsboards zusammenwirkt, für eine gegenseitige Übertragung und Empfang von PCI-Bus-Signalen gemäß einem PCI-Bus-Standard, und das mit dem CPCIe-CPU-Board verbunden ist, über ein PCIe-Externverdrahtung-Standard-konformes externes Kabel, das mit einem PCIe-Externverdrahtung-Standard-konformen Verbindungselement verbunden ist, das an einem Vorderpaneel angeordnet ist, und mit dem CPCIe-CPU-Board zusammen wirkt, für eine gegenseitige Übertragung und Empfang von PCIe-Bus-Signalen gemäß dem PCIe-Bus-Standard.

## Revendications

1. Convertisseur comprenant :
un panneau de commande de CPCIe (22) configuré pour être appliqué à un emplacement faisant partie d'emplacements prévus dans un panneau arrière de CPCIe (25) qui est un panneau arrière de dimension 3U conforme à la norme CPCIe, et coopérant avec une combinaison d'une carte de CPU de CPCIe et d'une carte d'extension de CPCIe appliquée aux autres emplacements différents de l'emplacement prévu dans le panneau arrière de CPCIe pour transmission et réception mutuelles de signaux de bus PCIe conformément à la norme de bus PCIe ; et
une carte de pontage de CPCI (11) configurée pour être appliquée à un emplacement faisant partie d'emplacements prévus dans un panneau arrière de CPCI (15) qui est un panneau arrière de dimension 6U conforme à la norme CPCI, et coopérant avec une carte d'extension de CPCI appliquée à un autre emplacement différent de l'emplacement prévu dans le panneau arrière de CPCI pour transmission et réception mutuelles de signaux de bus PCI conformément à la norme de bus PCI, et connectée au panneau de commande de CPCIe par l'intermédiaire d'un câble externe conforme à la norme de câblage externe de PCIe, connectée à un connecteur conforme à la norme de câblage externe de PCIe disposé sur un panneau avant et coopérant avec le panneau de commande de CPCIe pour transmission et réception mutuelles de signaux de bus PCIe conformément à la norme de bus PCIe.

2. Convertisseur comprenant :
Une carte CPU de CPCIe (21) configurée pour être appliquée à un emplacement faisant partie d'emplacements prévus dans un panneau arrière de CPCIe qui est un panneau arrière de dimension 3U conforme à la norme CPCIe, et coopérant avec une carte d'extension de CPCIe appliquée à un autre emplacement différent de l'emplacement prévu dans le panneau arrière de CPCIe pour transmission et réception mutuelles de signaux de bus PCIe conformément à la norme de bus PCIe, en fonction d'instructions d'un CPU incorporé ; et
une carte de pontage de CPCI (11) configurée pour être appliquée à un emplacement faisant partie d'emplacements prévus dans un panneau arrière de CPCI qui est un panneau arrière de dimension 6U conforme à la norme CPCI, et coopérant avec une carte d'extension de CPCI appliquée à un autre emplacement différent de l'emplacement prévu dans le panneau arrière de CPCI pour transmission et réception mutuelles de signaux de bus PCI conformément à la norme de bus PCI, et connectée à la carte CPU de CPCIe par l'intermédiaire d'un câble externe conforme à la norme de câblage externe de PCIe, connecté à un connecteur conforme à la norme de câblage externe de PCIe disposé sur un panneau avant et coopérant avec la carte de CPU de CPCIe pour transmission et réception mutuelles de signaux de bus PCIe conformément à la norme de bus PCIe.

3. Convertisseur selon la revendication 1, dans lequel la carte de pontage CPCI (11) comprend :
un dispositif de commande de signal défini par l'utilisateur (11b) configuré pour être connecté au panneau arrière de CPCI (15) pour convertir un signal défini par l'utilisateur qui est un signal pouvant être positionné pour commande par un utilisateur, fourni par la carte de pontage de CPCI en un signal de bus PCIe conformément à la norme de bus PCIe et pour convertir un signal de bus PCIe fourni en un signal défini par l'utilisateur ; et
un commutateur de PCIe (11a) configuré pour être connecté au panneau de commande de CPCIe par l'intermédiaire du câble externe et pour être connecté au dispositif de commande de signal défini par l'utilisateur par l'intermédiaire d'un câblage interne conforme à la norme de bus PCIe.

4. Convertisseur selon la revendication 2, dans lequel la carte de pontage de CPCI (11) comprend :
un dispositif de commande de signal défini par l'utilisateur (11b) configuré pour être connecté au panneau arrière de CPCI pour convertir un signal défini par l'utilisateur qui est un signal pouvant être positionné pour commande par un utilisateur, fourni par le panneau arrière de CPCI en un signal de bus PCIe conformément à la norme de bus PCIe et pour convertir un signal de bus PCIe fourni en un signal défini par l'utilisateur ; et
un commutateur de PCIe (11a) configuré pour être connecté à la carte de CPU de CPCIe par l'intermédiaire du câble externe et pour être connecté au dispositif de commande de signal défini par l'utilisateur par l'intermédiaire d'un câblage interne conforme à la norme de bus PCIe.

5. Convertisseur selon la revendication 1, dans lequel la carte de pontage de CPCI (11) comprend :
un dispositif de commande de signal défini par l'utilisateur configuré pour être connecté au panneau arrière de CPCI (15) pour convertir un signal défini par l'utilisateur qui est un signal pouvant être positionné pour commande par un utilisateur, fourni par le panneau arrière de CPCI en un signal de bus PCIe conformément à la norme de bus PCIe et pour convertir un signal de bus PCIe fourni en un signal défini par l'utilisateur ; et
un pont PCIe-PCI (11c) configuré pour être connecté au panneau de commande de CPCIe par l'intermédiaire du câble externe et pour être connecté au dispositif de commande de signal défini par l'utilisateur par l'intermédiaire d'un câblage interne conforme à la norme de bus PCI, pour convertir un signal de bus PCIe fourni par le panneau de commande de CPCIe en un signal de bus PCI pour être fourni au dispositif de commande de signal défini par l'utilisateur, et pour convertir un signal de bus PCI fourni par le dispositif de commande de signal défini par l'utilisateur en un signal de bus PCIe pour être fourni au panneau de commande de CPCIe.

6. Convertisseur selon la revendication 2, dans lequel la carte de pontage de CPCI (11) comprend :
un dispositif de commande de signal défini par l'utilisateur (11) configuré pour être connecté au panneau arrière de CPCI (15) pour convertir un signal défini par l'utilisateur qui est un signal pouvant être positionné pour commande par un utilisateur, fourni par le panneau arrière de CPCI en un signal de bus PCI conformément à la norme de bus PCI et pour convertir un signal de bus PCI fourni en un signal défini par l'utilisateur ; et
un pont PCIe-PCI (11c) configuré pour être connecté à la carte de CPU de CPCIe par l'intermédiaire du câble externe et pour être connecté au dispositif de commande de signal défini par l'utilisateur par l'intermédiaire d'un câblage interne conforme à la norme de bus PCI, pour convertir un signal de bus PCIe fourni par la carte de CPU de CPCIe en un signal de bus PCI pour être fourni au dispositif de commande de signal défini par l'utilisateur, et pour convertir un signal de bus PCI fourni par le dispositif de commande de signal défini par l'utilisateur en un signal de bus PCIe pour être fourni à la carte de CPU de CPCIe.

7. Système de commande incluant un premier contrôleur (1) conforme à la norme CPCI et un second contrôleur (2) conforme à la norme CPCIe et connecté au premier contrôleur par l'intermédiaire d'un câble externe conforme à la norme de câblage externe de PCIe, dans lequel
le second contrôleur (2) comprend :
un panneau arrière de CPCIe (25) qui est un panneau arrière de dimension 3U conforme à la norme CPCIe, et muni d'une pluralité d'emplacements ;
une carte de CPU de CPCIe conforme à la norme CPCIe dans laquelle est incorporé un CPU, et appliquée à un emplacement de la pluralité d'emplacements dont est muni le panneau arrière de CPCIe ;
un ensemble d'une ou plusieurs cartes d'extension de CPCIe conforme à la norme CPCIe appliqué à un ou plusieurs emplacements de la pluralité d'emplacements dont est muni le panneau arrière de CPCIe ; et
un panneau de commande de CPCIe (22) configuré pour être appliqué à un emplacement de la pluralité d'emplacements dont est muni le panneau arrière de CPCIe, et coopérant avec la carte de CPU de CPCIe et l'ensemble d'une ou plusieurs cartes d'extension de CPCIe pour transmission et réception mutuelles de signaux de bus PCIe conformément à la norme de bus PCIe, et le premier contrôleur comprend :
un panneau arrière de CPCI (15) qui est un panneau arrière de dimension 6U conforme à la norme CPCI,
un ensemble d'une ou plusieurs cartes d'extension de CPCI conforme à la norme CPCI appliqué à un ou plusieurs emplacements d'une pluralité d'emplacements dont est muni le panneau arrière de CPCI ; et
une carte de pontage de CPCI (11) configurée pour être appliquée à un ou plusieurs emplacements de la pluralité d'emplacements dont est muni le panneau arrière de CPCI, et coopérant avec l'ensemble d'une ou plusieurs cartes d'extension de CPCI pour transmission et réception mutuelles de signaux de bus PCI conformément à la norme de bus PCI, et connectée au panneau de commande de CPCIe par l'intermédiaire du câble externe connecté à un connecteur conforme à la norme de câblage externe PCIe disposé sur un panneau avant, et coopérant avec le panneau de commande de CPCIe pour transmission et réception mutuelles de signaux de bus PCIe conformément à la norme de bus PCIe.

8. Système de commande incluant un premier contrôleur (1) conforme à la norme CPCI et un second contrôleur (2) conforme à la norme CPCIe et connecté au premier contrôleur par l'intermédiaire d'un câble externe conforme à la norme de câblage externe de PCIe, dans lequel
le second contrôleur (2) comprend :
un panneau arrière de CPCIe (25) qui est un panneau arrière de dimension 3U conforme à la norme CPCIe, et muni d'une pluralité d'emplacements ;
un ensemble d'une ou plusieurs cartes d'extension de CPCIe conforme à la norme CPCIe appliqué à un ou plusieurs emplacements de la pluralité d'emplacements dont est muni le panneau arrière de CPCIe ; et
une carte de CPU de CPCIe, configurée pour être appliquée à un emplacement de la pluralité d'emplacements dont est muni le panneau arrière de CPCIe, et coopérant avec l'ensemble d'une ou plusieurs cartes d'extension de CPCIe pour transmission et réception mutuelles de signaux de bus PCIe conformément à la norme de bus PCIe, en fonction d'instructions d'un CPU incorporé, et le premier contrôleur comprend :
un panneau arrière de CPCI (15) qui est un panneau arrière de dimension 6U conforme à la norme CPCI,
un ensemble d'une ou plusieurs cartes d'extension de CPCI conforme à la norme CPCI appliqué à un ou plusieurs emplacements d'une pluralité d'emplacements dont est muni le panneau arrière de CPCI ; et
une carte de pontage de CPCI (11) configurée pour être appliquée à un ou plusieurs emplacements de la pluralité d'emplacements dont est muni le panneau arrière de CPCI, et coopérant avec l'ensemble d'une ou plusieurs cartes d'extension de CPCI pour transmission et réception mutuelles de signaux de bus PCI conformément à la norme de bus PCI, et connectée à la carte de CPU de CPCIe par l'intermédiaire d'un câble externe conforme à la norme de câblage externe PCIe connecté à un connecteur conforme à la norme de câblage externe de PCIe disposé sur un panneau avant, et coopérant avec la carte de CPU de CPCIe pour transmission et réception mutuelles de signaux de bus PCIe conformément à la norme de bus PCIe.
